# EUROPEAN PATENT APPLICATION

(11) **EP 0 959 324 A1**
(43) Date of publication of application: **24.11.1999**
(21) Application number: 99850073.0
(22) Date of filing: 04.05.1999
(51) Int. Cl.: G01B 7/06

(54) **Method and arrangement for measuring material thickness**

(30) Priority: 04.05.1998 SE 9801551
(71) Applicant: D/A Production AB, 127 23 Skärholmen (SE)
(72) Inventor: Aakerblom, Bengt, 143 40 Vaarby (SE)
(74) Representative: Lagman, Sven

(57) **Abstract**

The thickness of a web (1) of non-magnetic material is measured by a transducer (4) of the reluctance type with respect to a reference element (9) on the other side of the web at a curved section of the web. The shell (9) of a roller (2) or a support for the web can be used as the reference element. The transducer (4) used is concave at its end (6) facing towards the web and is coaxial with the roller.

## Description

### Technical field

The invention relates to on the one hand a method for measuring material thickness according to the precharacterizing clause of Patent Claim 1, and on the other hand an arrangement for measuring material thickness according to the precharacterizing clause of Patent Claim 8.

### State of the art

In the production of material in webs, for example paper or sheet metal, it is desirable to be able to measure the material thickness in the web so as to be able to control the production in various respects. In the case of a web of sheet metal for example, there is also a requirement to be able to measure the thickness of an applied layer of, for example, paint or film with a high degree of accuracy.

Over the years, many different measuring methods and forms of measuring equipment have been developed. In this connection, measurement has in general been performed in a free web section, in the space between the various rollers over which the web runs. In order to achieve good web stability in this respect, use has been made of measuring equipment on both sides of the web, often with small mutual spacing in order to guide the web well, and with a requirement for centring in relation to the transducer. In this connection, use has been made of inductive transducers, eddy-current transducers and reluctance transducers.

With greater requirements for measuring accurately, however, it has proved to be increasingly difficult to obtain sufficiently distinct fixing of the web in order to be able to perform reliable measurements. The web tends, especially at increasing rates, to have a variable position in one direction across the web, and this of course results in difficulties in measuring thickness.

### The object of the invention

The aim of the invention is to produce an improved method and an improved arrangement for measuring the thickness of a material web, in which a solution is provided for existing problems of simplicity and accuracy.

### Description of the invention

An improved measuring method is achieved according to the definition in Patent Claim 1. By performing the measurement where the web runs in a curved manner over a roller, the result is on the one hand that the roller defines the position of the web well and on the other hand that the web is smoothed out effectively in the transverse direction where measurement is performed. With a transducer which works according to the reluctance principle, different types of reference element can be selected in measurement, as required.

An improved arrangement is achieved according to the definition in Patent Claim 8. By shaping the transducer according to the roller over which the web runs, the possibility is obtained of working with a narrow gap between the transducer and the web, which increases the measuring accuracy.

Further advantages and features of the invention emerge from the following description and patent claims.

### Description of the figures

The invention is explained in greater detail below with the aid of exemplary embodiments shown in the appended drawing, in which:
Fig. 1 shows the principle of measuring thickness according to the invention,
Fig. 2 shows in greater detail a portion of Fig. 1, partly in section,
Fig. 3 shows a composite web of magnetic material, and
Fig. 4 shows a non-magnetic web on a magnetic support.

### Description of the embodiment

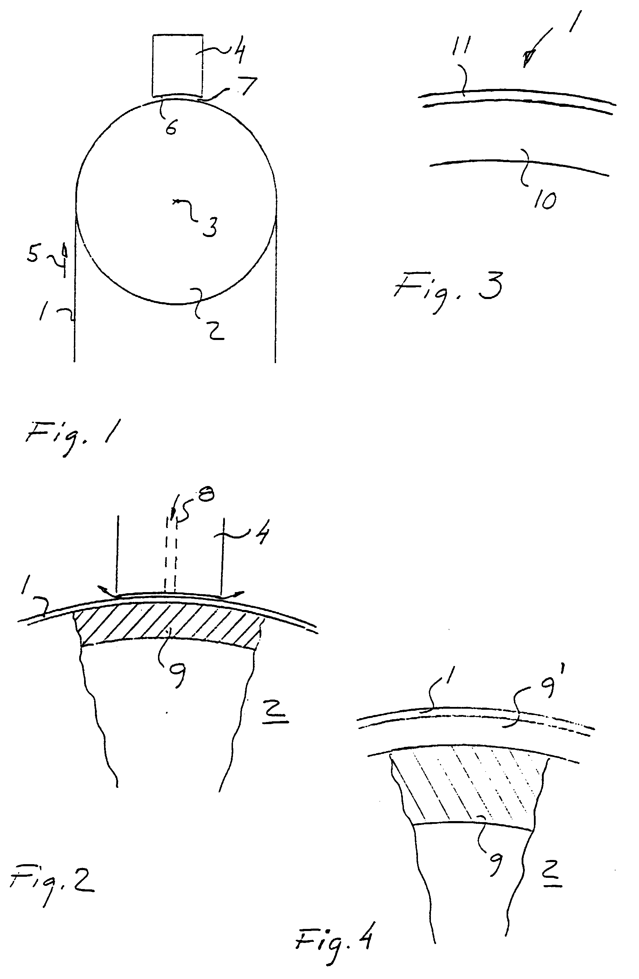

According to Fig. 1, a web 1 of non-magnetic (magnetically non-conductive) material, such as, for example, aluminium, copper, paper, plastic, runs over a cylindrical roller 2, the axis 3 of which is horizontal. Mounted in a stand (not shown in greater detail here) above the roller 2 is a transducer 4 for measuring the thickness of the web 1 where it passes over the roller in the direction of the arrow 5. The underside 6 of the transducer, which is concave and cylindrical, faces towards the web 1 and is located directly above the latter, with a narrow gap 7 between the underside 6 and the web 1. The curvature on the underside 6 is selected in such a manner that the underside is coaxial with the roller 2 and thus has its centre of curvature on the axis 3.

The transducer 4 is mounted with a given mobility in the vertical direction relative to the roller 2. As can be seen in greater detail in Fig. 2, the transducer 4 is held at a predetermined spacing from the web 1 by means of a gas cushion which is produced by gas being introduced into a gas duct 8 for distribution in the underside 6. In this way, gas can flow out in the lateral direction according to the arrows and form a gas cushion which separates the transducer and the web.

The gas supplied is suitably air, and, by adapting the gas supply, the desired gap size can be achieved and maintained with great accuracy.

The transducer 4 is a positional transducer and works according to the reluctance principle. It interacts in a known manner with a magnetic (magnetically conductive) reference element on the opposite side of the web 1. In this case, the reference element consists of the shell 9 of the roller 2. Transducers of this type are well-known and have been described in, for example, Swedish patent 7904903-7, for which reason a detailed description of the operation and construction of the transducer is not required in this context. Measurement with respect to the reference element thus takes place according to the reluctance method.

By virtue of the fact that measurement takes place in relation to the web 1 where the latter runs over the roller 2, the result is that the web is smoothed out and very even at the point of measurement. This means that height variations in the web are in principle constituted only by thickness variations, which makes good measuring accuracy possible.

The gap 7 between the transducer 4 and the web 1 produced by means of the gas cushion can be made as small as 30-100 µm, depending on the roller diameter and the type of material in the web 1.

The web 1 of non-magnetic material may be homogeneous but it may also be constructed of a number of different layers. A possible example is shown in Fig. 3, where a non-magnetic sheet 10 of, for example, aluminium is coated with a non-magnetic paint layer 11, the thickness of which is to be checked in connection with a painting process. With knowledge of the thickness of the sheet 10, it is possible, using the measuring method described, to check and, if appropriate, control the thickness of the paint layer 11 which thus makes up a given proportion of the thickness of the web 1 as a whole.

According to the invention, it is also possible to measure and, if appropriate, control the thickness of a non-magnetic layer on a magnetic layer of, for example, sheet. An example of this is shown in Fig. 4, where a web 1 of non-magnetic material, in this case paint, is supported by a thin sheet 9' of magnetic material, for example sheet steel. By virtue of its bearing against the roller 2, the sheet 9' has an accurately defined position and can in this way form the reference element for the transducer 4. The thickness of the web 1, that is to say the paint layer in this case, can in this way be measured in in principle the same manner as in Fig. 2. In this case, the shell 9 of the roller 2 does not have to be made of magnetic material but can be made of non-magnetic material because of course the magnetic sheet 9' forms the reference element for the transducer 4.

The thickness of a paint layer may usually amount to approximately 200-300 µm, but considerably smaller values, down to approximately 10 µm, can also be found. When sheet is used as a support for a layer of paint or film, the thickness of the sheet should not exceed approximately 2 mm so that the roller 2 does not have to have too great a diameter. If so desired, however, values other than those stated here are possible, if necessary with reduced accuracy as a result.

## Claims

1. Method for measuring the material thickness of a web (1) of non-magnetic material by means of a transducer (4) which is arranged close to the web, works according to the reluctance principle and interacts with a magnetic reference element (9, 9') on the opposite side of the web (1), characterized in that measurement is performed at a curved section of the web (1) where the latter runs over a cylindrical roller (2) arranged transversely to the direction of movement of the web, the reference element (9, 9') having a curvature during measurement corresponding to the curvature of the roller surface.

2. Method according to Claim 1, characterized in that the shell (9) of the roller is used as the reference element.

3. Method according to Claim 1, characterized in that a support web (9') made of magnetic material on which the web (1) rests, is used as the reference element.

4. Method according to any one of Claims 1-3, characterized in that the transducer (4) is directed towards the web (1) from above and is held at a predetermined spacing (7) from the web by means of a gas cushion.

5. Method according to any one of Claims 1-4, characterized in that that end (6) of the transducer (4) facing towards the web has a cylindrical surface which is oriented coaxially with the roller (2).

6. Method according to Claim 5, characterized in that the spacing (7) between the web and the transducer is preferably smaller than 100 µm.

7. Method according to any one of Claims 1-6, characterized in that the web (1) before and after the roller is vertical, and in that measurement is performed at the top side of the roller (2).

8. Arrangement for measuring the material thickness of a web (1) of non-magnetic material, with a transducer (4) which is intended for positioning close to the web, works according to the reluctance principle and is intended to measure with respect to a magnetic reference element (9, 9') on the other side of the web, characterized in that the transducer (4) has, at the end (6) which is intended to face towards the web, a concave, cylindrical surface which is intended to be coaxial with a convex, cylindrical surface on the reference element (9, 9'), on which surface the web (1) is located during measurement, and in that the axis (3) of the cylindrical surfaces is intended to be oriented at right angles to the direction of movement (5) of the web.

9. Arrangement according to Claim 8, characterized in that the transducer (4) has, at its end surface (6), means for blowing out gas to form a gas cushion against the web during measurement.
